# EUROPÄISCHE PATENTSCHRIFT

(11) **EP 0 750 874 B1**
(45) Veröffentlichungstag und Bekanntmachung des Hinweises auf die Patenterteilung: **05.01.2000**
(21) Anmeldenummer: 96105005.1
(22) Anmeldetag: 29.03.1996
(51) Int. Cl.: A47J 43/25

(54) **Küchengerät zum Schneiden von Gut, vorzugsweise Obst oder Gemüse**
Kitchen apparatus for cutting material, in particular fruits or vegetables
Appareil de cuisine pour coupes des aliments, en particulier des fruits ou des légumes

(30) Priorität: 27.06.1995 DE 19523272
(43) Veröffentlichungstag der Anmeldung: 02.01.1997
(73) Patentinhaber: Alfred Börner Kunststoff- u. Metallwarenfabrik GmbH, 54526 Niederkail (DE)
(72) Erfinder: Plein, Josef, 54647 Dudeldorf (DE)
(74) Vertreter: Goddar, Heinz J., Dr.

(56) Entgegenhaltungen:
- EP-A- 0 189 743
- CH-A- 137 164
- DE-U- 9 313 966
- FR-A- 634 732
- US-A- 2 447 714

## Beschreibung

Die Erfindung betrifft ein Küchengerät für das Schneiden von Gut, vorzugsweise Obst oder Gemüse, in Streifen, mit einer Grundplatte, auf deren Oberseite Anlaufflächen und zwischen diesen Anlaufflächen mindestens eine Messerreihe, die im wesentlichen quer zur Schneidrichtung verlaufend angeordnet ist, vorgesehen sind, deren Messer mit Schneiden in der Höhe über die Anlauffläche hinausragen und zur Unterseite der Grundplatte offen ausgebildet sind, wobei die mindestens eine Messerreihe unter Bildung von oberen Querstegen ausgestaltet ist, wobei die die Messer bildenden oberen Querstege über die Anlaufflächen hinausragen und jeweils eine im wesentlichen zentral angeordnete Vertiefung in Richtung auf die Unterseite der Grundplatte aufweisen.

Ein solches Küchengerät ist aus der EP-A-0 189 743 bekannt. Mit dem bekannten Küchengerät lassen sich allerdings, entsprechend seiner bevorzugten Funktion als Röstischneider, nur sehr schmale Streifen schneiden. Eine Vergrößerung der über die Anlauffläche hinausragenden Messer führt zwar zu breiterem Schnittgut, aber vor allem auch zu nicht gewünschtem dickerem Schnittgut. Versucht man die Messer lediglich in ihrer horizontalen Ausdehnung zu vergrößern, so wird keine ausreichende Führung des Schnittgutes mehr gewährleistet.

In der CH-A-137 164 wird ferner ein Gerät zum Zerkleinern von Nahrungsmitteln offenbart, das ein Zerkleinerungsorgan mit Durchbrechungen und Erhöhungen vorsieht. Die Schneideorgane werden dabei durch lippenartige Erhöhungen gebildet, die über eine Ebene hervorstehen, wobei sie so geformt sind, daß sie dem zu zerkleinernden Material die gewünschte Form geben, wobei auch ein zumindest teilweise v-förmiger Querschnitt möglich ist. In der Ebene, in der das zu zerkleinernde Material geführt wird, also unterhalb der Ebene, in der die Schneidorgane liegen, sind Vertiefungen bzw. Absenkungen der Ebene vorgesehen.

Der Erfindung liegt demnach die Aufgabe zugrunde, ein Küchengerät zur Verfügung zu stellen, das dünne, aber breitere Streifen des Gutes abschneidet und dabei ein sauberes, geführtes Ablenken des abgeschnittene Streifens ermöglicht. Der abgeschnittene Streifen soll dabei besonders regelmäßig geschnitten werden.

Diese Aufgabe wird erfindungsgemäß dadurch gelöst, daß an den Schneiden der oberen Querstege mindestens zwei in Richtung der Unterseite der Grundplatte weisende v-förmige Anlaufnuten oder mindestens zwei in Richtung der Oberseite der Grundplatte ausgeformte, einen Zwischenraum zwischen ihnen aufweisende, v-förmige Anlaufnuten angeordnet sind, die sowohl in ihrer vertikalen als auch in ihrer quer zur Schneidrichtung betrachteten horizontalen Ausdehnung der Größe der Vertiefung angepaßt sind, wobei die mindestens zwei in Richtung der Unterseite der Grundplatte weisenden Anlaufnuten oder der Zwischenraum zwischen den mindestens zwei in Richtung der Oberseite der Grundplatte weisenden Anlaufnuten in Schneidrichtung betrachtet im wesentlichen zentral vor der Vertiefung angeordnet sind/ist.

Besonders vorteilhafte Ausführungsformen der Erfindung ergeben sich aus den Unteransprüchen.

Die an den Schneiden angebrachten Anlaufnuten schaffen beim Auftreffen des zu schneidenden Gutes auf die Schneiden wenigstens zwei v-förmige Vertiefungen oder Erhöhungen in dem Streifen des zu schneidenden Gutes. Diese Vertiefungen oder Erhöhungen in dem Streifen dienen als Führungskanäle. Beim Weiterschieben des Guts über den Messerstreifen greift nun die Spitze der Vertiefung in die so geschaffenen Führungskanäle ein. Die Vertiefung ist deshalb vorzugsweise spitzkonisch geformt.

Der abgeschnittene Streifen wird somit, auch wenn er breit und sehr dünn ist, exakt geführt.

Auf diese Weise wird der Streifen auch besonders regelmäßig geschnitten, da ein unkontrolliertes Brechen bzw. ein Abschneiden des Streifens an einer unerwünschten Stelle, was durch ein ungerichtetes und damit ungleichmäßiges Ablenken der erst zum Teil geschnittenen einzelnen Streifen hervorgerufen werden kann, vermieden wird.

Desweiteren schaffen die durch die v-förmigen Anlaufnuten gebildeten Führungskanäle eine sowohl auf der Oberseite als auch auf der Unterseite des Schnittgutes vorhandene strukturierte Oberfläche, die besonderen ästhetischen Anforderungen entspricht.

Besonders vorteilhaft ist es, mehrere in Richtung der Unterseite der Grundplatte weisende Anlaufnuten an den Schneiden vorzusehen. Dadurch entstehen mehrere Führungskanäle, die eine noch sichereres Eingreifen der Vertiefung in diese Führungskanäle des abgeschnittenen Steifens ermöglichen. Dies ist vor allem dann wichtig, wenn weicheres und nicht so stabiles Gut geschnitten werden soll. Auch die Oberfläche des abgeschnittenen Streifens wird dabei, im Hinblick auf das ästhetische Empfinden, über eine umfangreiche Fläche strukturiert.

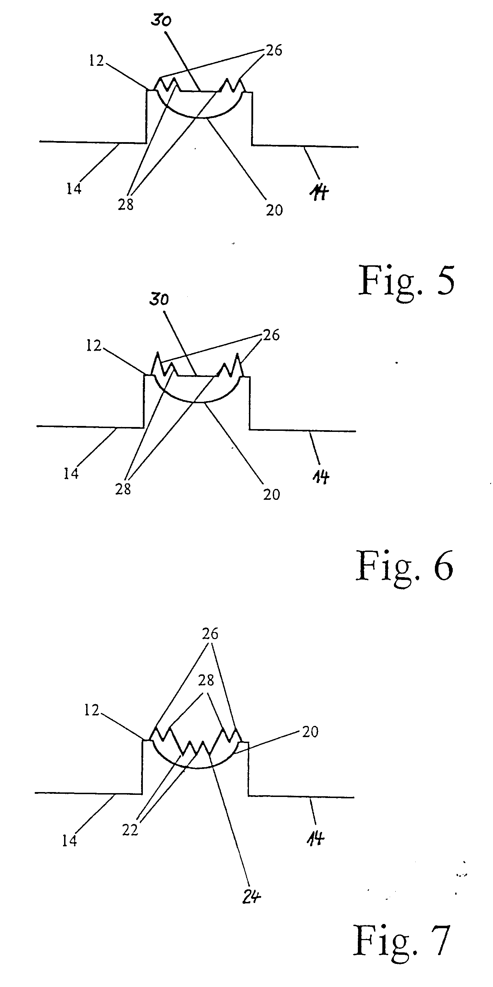

Eine ähnliche Wirkung wird erzielt, wenn anstelle der in Richtung der Unterseite der Grundplatte weisenden Anlaufnuten zwei oder mehrere in Richtung der Oberseite der Grundplatte weisende Anlaufnuten in zwei Bereichen auf den oberen Querstegen vorgesehen sind, wobei zwischen diesen beiden Bereichen ein Zwischenraum definiert ist, in dem im allgemeinen keine Nuten vorgesehen sind. In Richtung der Oberseite der Grundplatte weisend bedeutet hier von den oberen Querstegen nach oben, von der Grundplatte weg weisend, wie es auch aus den Figuren 5 bis 7 ersichtlich ist.

Zusätzlich können aber in diesem Zwischenraum auch in Richtung der Unterseite der Grundplatte weisende Anlaufnuten vorgesehen werden. Die dadurch sehr stark ausgebildeten Höhenunterschiede in der Struktur der Oberfläche des abgeschnittenen Streifenes führen zu einem besonders deutlichen Eingreifen der Vertiefung in die geschaffene Struktur, so daß ein sehr sicheres Führen des Schnittgutes ermöglicht wird. Die Oberflächen der abgeschnittenen Scheiben weisen dann nahezu über ihren gesamten Bereich eine strukturierte Oberfläche auf.

Die vorgesehenen Nuten können sowohl die gleiche horizontale und vertikale Ausdehnung als auch unterschiedliche vertikale und/oder horizontale Ausdehnungen aufweisen. Dadurch kann die Form der im Schnittgut geschaffenen Führungskanäle besonders exakt an die Form der in dem oberen Quersteg vorgesehenen Vertiefung angepaßt werden. Ferner stehen damit viele Möglichkeiten zur Verfügung, die Oberfläche unterschiedlich zu strukturieren und damit den ästhetischen Anforderungen anzupassen.

In einer bevorzugten Ausgestaltung ist die mindestens eine Messerreihe aus einem Metallband unter Bildung von oberen Querstegen und unteren Querstegen und diese verbindende Seitenstege einstückig mäanderartig ausgebildet, wobei die unteren Querstege unterhalb der Anlaufflächen angeordnet und in oder an der Grundplatte befestigt sind.

Besonders bevorzugt ist dabei, daß die unteren Querstege der Messerreihen in die Grundplatte eingegossen und damit fest mit der Grundplatte des Küchengerätes verbunden werden. Dadurch entfallen störende Befestigungselemente auch auf der Unterseite des Küchengerätes. Der Messerstreifen bzw. das Metallband kann allerdings auch mittels Kleben, Schrauben, Klemmen oder durch Ultraschallschweißen fest mit der Grundplatte des Küchengerätes verbunden werden.

Bei einer anderen möglichen Ausführungsform ist dabei vorgesehen, daß der Messerstreifen auswechselbar an der Grundplatte befestigt ist. Dadurch können je nach Bedarf auch unterschiedliche Messerstreifen verwendet werden, um z.B. unterschiedlich strukturierte Oberflächen zu schaffen. Auch können eventuell beschädigte Messer ausgetauscht werden, um zu vermeiden, daß in solchen Fällen das gesamte, hochwertige Küchengerät nicht mehr verwendungsfähig ist.

Bei der Ausgestaltung der Messerreihen in Form von Metallbändern entspricht bevorzugt die Breite eines oberen Quersteges in etwa der Breite eines unteren Quersteges.

Als Alternative zu der Ausgestaltung als Messerband kann für eine oder beide Messerreihen vorgesehen sein, daß diese aus Einzelmessern zusammengesetzt sind, die jeweils in die Grundplatte eingelassen oder auf andere Weise mit ihr befestigt sind.

Bei einer weiteren Ausführungsform ist die Messerreihe in bezug auf die Schneidrichtung abweichend von einem 90°-Winkel angeordnet. Die Schneiden sind allerdings weiterhin so ausgerichtet, daß die Schneiden im rechten Winkel zur Schneidenrichtung verlaufen. Das hat den Vorteil, daß das zu schneidende Gut nicht gleichzeitig über seine gesamte Breite sondern während eines Schneidvorganges kontinuierlich von einer Seite zur anderen über lediglich schmalere Bereiche geschnitten wird. Das hat zur Folge, daß geringere Kräfte beim Schieben des Guts über die Anlaufflächen notwendig sind. Der Bediener des Küchengerätes wird beim Schneidem stabileren Schnittguts entlastet und weicheres und instabileres Schnittgut, wie zum Beispiel halbgare Kartoffeln, werden nicht bereits vor dem Schneiden durch die notwendigen Haltekräfte beschädigt.

In einer weiteren Ausführungsform sind zwischen den Anlaufflächen zwei Messerreihen vorgesehen. Diese Messerreihen sind vorzugsweise in zueinander versetzten Reihen angeordnet. Das ermöglicht ein gleichmäßiges Bearbeiten der Oberfläche des zu schneidenden Guts, die, abgesehen von den eingeschnittenen Führungskanälen, dann im wesentlichen plan ist.

Besonders bevorzugt ist es, daß die oberen Querstege der Messerreihen doppelschneidige Messer bilden. Dadurch wird ein besonders einfaches und zügiges Bearbeiten des Guts ermöglicht, da das Gut zwischen den Anlaufflächen hin und her bewegt werden kann, ohne von den Anlaufflächen abgesetzt werden zu müssen.

Es kann vorteilhaft sein, die Kontur der Grundplatte im Bereich der Messerreihe(n) bzw. in denjenigen Bereichen, in denen die Messer aufgenommen sind, in einer leicht nach oben weisenden Wölbung auszuführen, damit ein wenn auch kleiner Anschnittwinkel beispielsweise einer Frucht realisiert wird.

Nachfolgend werden Ausführungsbeispiele der Erfindung anhand von Zeichnungen näher erläutert. Es zeigt/zeigen:
- Figur 1: eine perspektivische, schematische Gesamtansicht einer ersten Ausführungsform eines erfindungsgemäßen Küchengerätes (insbesondere der Aufbau der Messerreihen ist hier nur angedeutet),
- Figur 2: eine Draufsicht auf einen Ausschnitt einer ersten Ausführungsform eines erfindungsgemäßen Messerstreifens,
- Figur 3: eine Seitenansicht auf einen Ausschnitt einer ersten Ausführungsform eines erfindungsgemäßen Messerstreifens,
- Figuren 4, 5, 6, 7: Seitenansichten von Ausschnitten des Messerstreifens gemaß weiteren bevorzugten Ausführungsformen.

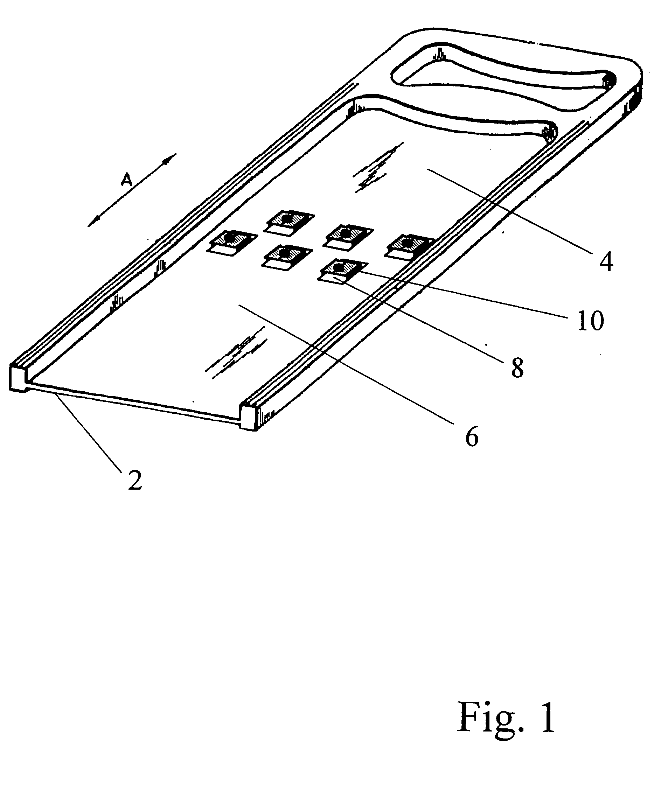

Figur 1 zeigt ein erfindungsgemäßes Küchengerät, im wesentlichen bestehend aus einer ebenen Grundplatte 2, welche auf ihrer Oberseite zwei Anlaufflächen 4 und 6 aufweist.

Zwischen den Anlaufflächen 4 und 6 sind im wesentlichen quer zur Schneidrichtung A ausgerichtete Messerreihen 10 zum Schneiden des Guts, insbesondere Obst und Gemüse, angeordnet. Unterhalb der Messerreihen 10 ist die Grundplatte 2 mit Durchbrüchen 8 zum Abführen der abgeschnittenen Späne zur Unterseite des Küchengerätes versehen. Das zu schneidende Gut wird zwischen den Anlaufflächen 4 und 6 über die Messerreihen 10 hin und her bewegt, bis das Gut vollständig aufgeschnitten ist. Dabei wird das zu schneidende Gut zum Schutz vor Verletzungen in einer hier nicht gezeigten Haltevorrichtung befestigt.

Eine Messerreihe 10 besteht dabei in einer bevorzugten Ausgestaltung aus einem mäanderförmig gebogenen Messerstreifen oder Metallband mit oberen Querstegen 12 und unteren Querstegen 14, die über Seitenstege verbunden sind.

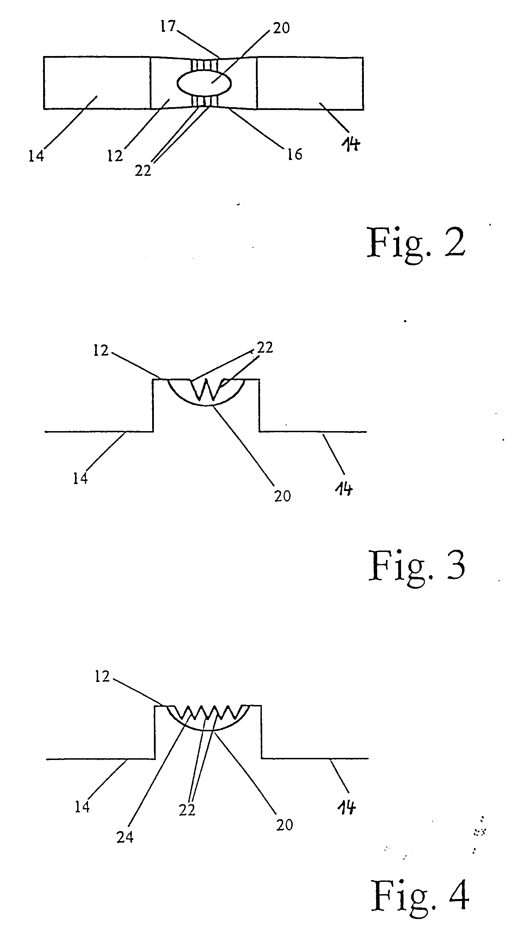

Figur 2 zeigt in der Draufsicht einen Teil eines solchen Messerstreifens 10 mit einem oberen Quersteg 12 und zwei unteren Querstegen 14, die durch Seitenstege mit den oberen Querstegen 12 verbunden sind. In dem oberen Quersteg 12 des Messerstreifens ist eine zentrale Vertiefung 20 angeordnet. In den oberen Quersteg 12 sind zwei Anlaufnuten 22 zwischen den Schneiden 16, 17 des oberen Querstegs, die von der Vertiefung 20 unterbrochen sind, eingearbeitet.

Figur 3 zeigt in der Seitenansicht deutlicher die v-förmigen Anlaufnuten 22 und die in den oberen Quersteg 12 zentral eingeformte Vertiefung 20, die beim Küchengerät zur Unterseite der Grundplatte weist.

Figur 4 zeigt eine weitere Ausführungsform, in der rechts und links von den Anlaufnuten 22 weitere in Richtung der Unterseite der Grundplatte 2 weisende Anlaufnuten 24 eingeformt sind.

Bei der in der Figur 5 gezeigten Ausführungsform sind neben den zwei in Richtung der Oberseite der Grundplatte weisenden Anlaufnuten 28 weitere in Richtung der Oberseite weisende Anlaufnuten 26 vorgesehen. Die Anlaufnuten sind in zwei Gruppen an den Randbereichen des oberen Quersteges 12 angeordnet und definieren zwischen diesen beiden Gruppen einen Zwischenraum 30. Die Vertiefung 20 greift bei dieser Ausführungsform in den durch diesen Zwischenraum in den Streifen eingeschnittenen Führungskanal ein.

In Figur 6 ist eine Ausführungsform dargestellt, in der die zusätzlichen Anlaufnuten 26 eine größere vertikale Ausdehnung aufweisen als die Anlaufnuten 28. Dadurch wird der in den Streifen eingeschnittene Führungskanal, in den die Vertiefung 20 nach dem Schneiden des Gutes eingreift, stärker strukturiert und hervorgehoben.

Figur 7 zeigt eine Kombination von in Richtung der Unterseite der Grundplatte 2 weisenden Anlaufnuten 22, 24 und von in Richtung der Oberseite der Grundplatte 2 weisenden Anlaufnuten 26, 28. Durch eine solche Anordnung der Nuten 22, 24, 26, 28 wird eine stark strukturierte Oberfläche mit einem ausgeprägten Führungskanal in den abgeschnittenen Scheiben erzielt. Die Nuten 22, 24, 26, 28 weisen je in etwa gleiche Größen auf, sie können aber auch durchaus unterschiedliche Ausdehnungen zeigen. Zum Beispiel können die Anlaufnuten 28 in ihrer vertikalen Ausdehnung vergrößert werden, um die Tiefe des Führungskanals weiter zu vergrößern. Die Anlaufnuten 26 dienen dann zur Stabilisierung der geschaffenen Oberflächenstrukturierung.

Bei allen Ausgestaltungen kann anstelle des Messerstreifens oder Metallbandes auch eine Vielzahl von Einzelmessern vorgesehen sein, die, jeweils einzeln oder in Kombination, mit den oben beschriebenen Strukturmerkmalen versehen sind. Ein Einzelmesser weist dabei zum Einlassen oder Befestigen in bzw. an der Grundplatte 2 geeignete Ansätze auf.

Im folgenden wird die Wirkungsweise des Küchengerätes anhand der in Figur 1 gezeigten ersten Ausführungsform mit zwei hintereinander und versetzt angeordneten Messerreihe 10 erläutert.

Durch die versetzte Anordnung der oberen Querstege 12 der einzelnen Messerstreifen 10 liegt jeweils ein oberer Quersteg 12 des einen Messerstreifens 10 vor oder hinter einem unteren Quersteg 14 des anderen Messerstreifens 10.

Das zu schneidende Gut wird nun beispielsweise auf der Anlauffläche 4 aufgesetzt und dann in Schneidrichtung A über die Messerstreifen hinweg auf die Anlauffläche 6 geführt, wobei auf der Unterseite des Guts Streifen abgeschnitten werden. Durch die versetzte Anordnung der Messer ist das Gut, wenn es gänzlich über beide Messer auf die Anlauffläche 6 geführt worden ist, wieder nahezu plan. Die erfindungsgemäße Ausführung der Messerstreifen stellt beim Schneiden des Guts ein sicheres und kontrolliert gelenktes Führen des abgeschnittenen Streifenes sicher.

Ein Brechen bzw. ein vorzeitiges Abschneiden des Streifenes hervorgerufen durch ein ungerichtetes Ablenken, wird dadurch vermieden. Die einheitlichen Streifen des geschnittenen Gutes fallen an der Unterseite der Grundplatte 2 durch die vorgesehenen Durchbrüche 8 heraus.

Das Gut wird nun solange abwechselnd zwischen den beiden Anlaufflächen 4 und 6 über die Messerreihen 10 hin und her geführt, bis es vollständig verarbeitet ist. Die Haltevorrichtung für das zu schneidende Gut zur Vermeidung von Verletzungen ist hier nicht gezeigt.

Mit dem erfindungsgemäßen Küchengerät lassen sich vor allem Obst und Gemüse für eine ästhetische Anrichtung an Salaten oder ähnlichem, z.B. für ein Buffett, verarbeiten.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

### Bezugszeichenliste

- 2: Grundplatte
- 4, 6: Anlaufflächen
- 8: Durchbrüche durch die Grundplatte 2
- 10: Messerreihen
- 12: obere Querstege
- 14: untere Querstege
- 16, 17: Schneiden
- 20: Vertiefung
- 22: zur Unterseite der Grundplatte 2 weisende Anlaufnuten
- 24: zur Unterseite der Grundplatte 2 weisende Anlaufnuten
- 26: zur Oberseite der Grundplatte 2 weisende Anlaufnuten
- 28: zur Oberseite der Grundplatte 2 weisende Anlaufnuten
- 30: Zwischenraum

## Patentansprüche

1. Küchengerät für das Schneiden von Gut, vorzugsweise Obst oder Gemüse, in Streifen, mit einer Grundplatte (2), auf deren Oberseite Anlaufflächen (4, 6) und zwischen diesen Anlaufflächen mindestens eine Messerreihe (10), die im wesentlichen quer zur Schneidrichtung (A) verlaufend angeordnet ist, vorgesehen sind, deren Messer mit Schneiden (16) in der Höhe über die Anlaufflächen (4, 6) hinausragen und zur Unterseite der Grundplatte (2) offen ausgebildet sind, wobei die mindestens eine Messerreihe (10) unter Bildung von oberen Querstegen (12) ausgestaltet ist, wobei die die Messer bildenden oberen Querstege (12) über die Aplaufflächen (4, 6) hinausragen und jeweils eine im wesentlichen zentral angeordnete Vertiefung (20) in Richtung auf die Unterseite der Grundplatte (2) aufweisen, dadurch gekennzeichnet, daß
- an den Schneiden (16) der oberen Querstege (12) mindestens zwei in Richtung der Unterseite der Grundplatte (2) weisende v-förmige Anlaufnuten (22) oder mindestens zwei, in Richtung der Oberseite der Grundplatte (2) weisende, einen Zwischenraum (30) zwischen ihnen definierende, v-förmige Anlaufnuten (28) angeordnet sind, die sowohl in ihrer vertikalen als auch in ihrer quer zur Schneidrichtung (A) betrachteten horizontalen Ausdehnung der Größe der Vertiefung (20) angepaßt sind, wobei die mindestens zwei in Richtung der Unterseite der Grundplatte (2) weisenden Anlaufnuten (22) oder der Zwischenraum (30) zwischen den mindestens zwei in Richtung der Oberseite der Grundplatte weisenden Anlaufnuten (28) in Schneidrichtung (A) betrachtet im wesentlichen zentral vor der Vertiefung (20) angeordnet sind/ist.

2. Kuchengerät nach Anspruch 1, dadurch gekennzeichnet, daß zusätzliche, in Richtung der Unterseite der Grundplatte (2) weisende Anlaufnuten (24) direkt angrenzend auf beiden Seiten der mindestens zwei in Richtung der Unterseite der Grundplatte weisenden Anlaufnuten (22) oder zusätzliche in Richtung der Oberseite der Grundplatte (2) weisende Anlaufnuten (26) außerhalb des Zwischenraumes (30) direkt angrenzend an die in Richtung der Oberseite der Grundplatte (2) weisenden Anlaufnuten (28) vorgesehen sind.

3. Küchengerät nach Anspruch 1, dadurch gekennzeichnet, daß sowohl im wesentlichen mittig angeordnete, in Richtung der Unterseite der Grundplatte (2) ausgebildete Anlaufnuten (22, 24) als auch an den Außenseiten, angrenzend an diese Anlaufnuten (22, 24) in Richtung der Oberseite der Grundplatte (2) ausgeformte Anlaufnuten (26, 28) vorgesehen sind.

4. Küchengerät nach einem der vorhergehenden Ansprüche, dadurch gekennzeichnet, daß die Nuten (22, 24, 26, 28) die gleiche horizontale und vertikale Ausdehnung aufweisen.

5. Küchengerät nach einem der Ansprüche 1 bis 3, dadurch gekennzeichnet, daß die Anlaufnuten (22, 24, 26, 28) unterschiedliche vertikale und/oder horizontale Ausdehnungen aufweisen.

6. Küchengerät nach Anspruch 1, dadurch gekennzeichnet, daß die mindestens eine Messerreihe (10) aus einem Metallband unter Bildung der oberen Querstege (12) und unteren Querstegen (14) und diese verbindende Seitenstücke einstückig mäanderartig ausgebildet ist, wobei die unteren Querstege (14) unterhalb der Anlaufflächen (4, 6) angeordnet und in oder an der Grundplatte (2) befestigt sind.

7. Küchengerät nach Anspruch 6, dadurch gekennzeichnet, daß die unteren Querstege (14) in die Grundplatte (2) eingegossen oder mittels Kleben, Schrauben, Klemmen oder Ultraschallschweißen fest mit der Grundplatte (2) des Küchengerätes verbunden sind.

8. Küchengerät nach Anspruch 6 oder 7, dadurch gekennzeichnet, daß die Breite eines oberen Quersteges (12) in etwa der Breite eines unteren Quersteges (14) entspricht.

9. Küchengerät nach einem der vorhergehenden Ansprüche, dadurch gekennzeichnet, daß die mindestens eine Messerreihe (10) auswechselbar an der Grundplatte (2) befestigt sind.

10. Küchengerät nach Anspruch 1, dadurch gekennzeichnet, daß die mindestens eine Messerreihe aus einer Vielzahl von Einzelmessern besteht.

11. Küchengerät nach einem der vorhergehenden Ansprüche, dadurch gekennzeichnet, daß die Ausrichtung der mindestens eine Messerreihe (10) in bezug auf die Schneidrichtung (A) von einem 90°-Winkel abweicht, wobei die Schneiden (16) so ausgerichtet sind, daß die Schneidfronten im rechten Winkel zur Schneidrichtung verlaufen.

12. Küchengerät nach einem der vorhergehenden Ansprüche, dadurch gekennzeichnet, daß zwischen den Anlaufflächen (4, 6) zwei Messerreihen (10) angeordnet sind.

13. Küchengerät nach einem der vorhergenden Ansprüche, dadurch gekennzeichnet, daß die zwei Messerreihen (10) in zueinander versetzten Reihen angeordnet sind.

14. Küchengerät nach einem der vorhergehenden Ansprüche, dadurch gekennzeichnet, daß die oberen Querstege (12) der Messerreihen doppelschneidige Messer mit Schneiden (16, 17) bilden.

15. Küchengerät nach einem der vorhergehenden Ansprüche, dadurch gekennzeichnet, daß die Kontur der Grundplatte (2) im Anlaufbereich der Messerreihe(n) (10) eine in Richtung der Oberseite der Grundplatte (2) aufweisende Wölbung aufweist.

## Claims

1. A kitchen implement for cutting food, preferably fruit or vegetables, in strips, comprising a baseplate (2), on the top of which there are provided guide surfaces (4, 6) and, between the latter, at least one row of cutters (10) disposed substantially transversely of the cutting direction (A), the cutters having cutting edges (16) which project in height beyond the guide surfaces (4, 6) and are open towards the underside of the baseplate (2), the at least one row of cutters (10) having a configuration such as to form top transverse webs (12), the top transverse webs (12) which form the cutters projecting beyond the guide surfaces (4, 6) and each having a substantially centrally disposed recess (20) in the direction of the underside of the baseplate (2), characterised in that
- at the cutting edges (16) of the top transverse webs (12) there are provided at least two v-shaped guide grooves (22) pointing in the direction of the underside of the baseplate (2), or at least two v-shaped guide grooves (28) pointing in the direction of the top of the baseplate (2) and defining an intermediate space (30) between them, which guide grooves are adapted to the size of the recess (20) in both their vertical extent and in their horizontal extent as considered transversely of the cutting direction (A), the at least two guide grooves (22) which point in the direction of the underside of the baseplate (2), or the intermediate space (30) between the at least two guide grooves (28) pointing in the direction of the top of the baseplate being disposed substantially centrally in front of the recess (20) as considered in the cutting direction (A).

2. A kitchen implement according to claim 1, characterised in that additional guide grooves (24) pointing in the direction of the underside of the baseplate (2) are provided directly adjoining both sides of the at least two guide grooves (22) pointing in the direction of the underside of the baseplate or additional guide grooves (26) pointing in the direction of the top of the baseplate (2) are provided outside the intermediate space (30) directly adjoining the guide grooves (28) pointing in the direction of the top of the baseplate (2).

3. A kitchen implement according to claim 1, characterised in that there are provided both substantially centrally disposed guide grooves (22, 24) constructed in the direction of the underside of the baseplate (2) and also guide grooves (26, 28) formed on the outsides, adjoining said guide grooves (22, 24) in the direction of the top of the baseplate (2).

4. A kitchen implement according to any one of the preceding claims, characterised in that the grooves. (22, 24, 26, 28) have the same horizontal and vertical extent.

5. A kitchen implement according to any one of claims 1 to 3, characterised in that the guide grooves (22, 24, 26, 28) have different vertical and/or horizontal extents.

6. A kitchen implement according to claim 1, characterised in that the at least one row of cutters (10) is formed from a metal strip with the top transverse webs (12) and the bottom transverse webs (14) and side pieces which connect the same being formed in one piece meander-fashion, the bottom transverse webs (14) being disposed beneath the guide surfaces (4, 6) and being fixed in or on the baseplate (2).

7. A kitchen implement according to claim 6, characterised in that the bottom transverse webs (14) are cast into the baseplate (2) or firmly connected to the baseplate (2) of the kitchen implement by gluing, screwing, clamping or ultrasonic welding.

8. A kitchen implement according to claim 6 or 7, characterised in that the width of a top transverse web (12) corresponds approximately to the width of a bottom transverse web (14).

9. A kitchen implement according to any one of the preceding claims, characterised in that the at least one row of cutters (10) is interchangeably fixed on the baseplate (2).

10. A kitchen implement according to claim 1, characterised in that the at least one row of cutters consists of a plurality of individual cutters.

11. A kitchen implement according to any one of the preceding claims, characterised in that the alignment of the at least one row of cutters (10) with respect to the cutting direction (A) differs from a 90° angle, the cutting edges (16) being so aligned that the cutting fronts extend at a right angle to the cutting direction.

12. A kitchen implement according to any one of the preceding claims, characterised in that two rows of cutters (10) are disposed between the guide surfaces (4, 6).

13. A kitchen implement according to any one of the preceding claims, characterised in that the two rows of cutters (10) are disposed in staggered rows.

14. A kitchen implement according to any one of the preceding claims, characterised in that the top transverse webs (12) of the rows of cutters form double-edged cutters with cutting edges (16, 17).

15. A kitchen implement according to any one of the preceding claims, characterised in that the contour of the baseplate (2) in the guide zone of the row or rows of cutters (10) has a curvature pointing in the direction of the top of the baseplate (2).

## Revendications

1. Ustensile de cuisine pour couper en bandes des produits, de préférence des fruits ou des légumes, comportant une plaque de base (2) sur la face supérieure de laquelle sont prévues des surfaces portantes (4, 6) et, entre ces surfaces portantes, au moins une rangée de couteaux (10), qui s'étendent sensiblement transversalement à la direction de coupe (A), dont les couteaux dépassent en hauteur des surfaces portantes (4, 6), par des lames (16), et qui sont ouverts vers la face inférieure de la plaque de base (2), la ou les rangée(s) de couteaux (10) étant conçue(s) de manière à former des traverses supérieures (12), les traverses supérieures (12) qui forment les couteaux dépassant des surfaces portantes (4, 6) et présentant chacune un renfoncement (20) disposé sensiblement au centre, en direction de la face inférieure de la plaque de base (2), caractérisé en ce que
- sur les lames (16) des traverses supérieures (12) sont disposées au moins deux rainures portantes (22) en V, dirigées vers la face inférieure de la plaque de base (2), ou au moins deux rainures portantes (28) en V dirigées vers la face supérieure de la plaque de base (2) et qui définissent entre elles un espace intermédiaire (30), lesquelles rainures sont adaptées dans leur étendue verticale ainsi que dans leur étendue horizontale, vue transversalement à la direction de coupe (A), à la grandeur du renfoncement (20), les rainures portantes (22) au moins au nombre de deux, dirigées vers la face inférieure de la plaque de base (2) ou l'espace intermédiaire (30) entre les rainures portantes (28), au moins au nombre de deux, dirigées vers la face supérieure de la plaque de base, sont/est disposé(es) sensiblement au centre, devant le renfoncement (20), vu dans la direction de coupe (A).

2. Ustensile de cuisine selon la revendication 1, caractérisé en ce que des rainures portantes (24) supplémentaires, dirigées vers la face inférieure de la plaque de base (2), sont prévues directement adjacentes sur les deux côtés des rainures portantes (22), au moins au nombre de deux, dirigées vers la face inférieure de la plaque de base ou des rainures portantes (26) supplémentaires, dirigées vers la face supérieure de la plaque de base (2), sont prévues à l'extérieur de l'espace intermédiaire (30), directement adjacentes aux rainures portantes (28), dirigées vers la face supérieure de la plaque de base (2).

3. Ustensile de cuisine selon la revendication 1, caractérisé en ce que sont prévues aussi bien des rainures portantes (22, 24) disposées sensiblement au centre, formées en direction de la face inférieure de la plaque de base (2) que des rainures portantes (26, 28) formées sur les côtés extérieurs, adjacentes à ces rainures portantes (22, 24), dirigées vers la face supérieure de la plaque de base (2).

4. Ustensile de cuisine selon l'une des revendications précédentes, caractérisé en ce que les rainures (22, 24, 26, 28) présentent la même étendue horizontale et verticale.

5. Ustensile de cuisine selon l'une des revendications 1 à 3, caractérisé en ce que les rainures portantes (22, 24, 26, 28) présentent des étendues verticales et/ou horizontales différentes.

6. Ustensile de cuisine selon la revendication 1, caractérisé en ce que la ou les rangée(s) de couteaux (10) est ou sont réalisées dans une bande de métal en méandres et d'une seule pièce, en formant les traverses supérieures (12) et les traverses inférieurs (14) ainsi que des pièces latérales reliant celles-ci, les traverses inférieures (14) étant disposées au-dessous des surfaces portantes (4, 6) et fixées dans ou à la plaque de base (2).

7. Ustensile de cuisine selon la revendication 6, caractérisé en ce que les traverses inférieures (14) sont moulées dans la plaque de base (2) ou sont assemblées fixement à la plaque de base (2) de l'ustensile de cuisine, par collage, vissage, serrage ou soudage aux ultrasons.

8. Ustensile de cuisine selon la revendication 6 ou 7, caractérisé en ce que la largeur d'une traverse supérieure (12) correspond à peu près à la largeur d'une traverse inférieure (14).

9. Ustensile de cuisine selon l'une des revendications précédentes, caractérisé en ce que la ou les rangées des couteaux (10) sont fixées de manière interchangeable à la plaque de base (2).

10. Ustensile de cuisine selon la revendication 1, caractérisé en ce que la ou les rangées de couteaux sont constituées d'un grand nombre de couteaux individuels.

11. Ustensile de cuisine selon l'une des revendications précédentes, caractérisé en ce que l'orientation de la ou des rangées de couteaux (10) par rapport à la direction de coupe (A) diffère d'un angle de 90°, les lames (16) étant orientées de manière que les fronts de coupe s'étendent à angle droit par rapport à la direction de coupe.

12. Ustensile de cuisine selon l'une des revendications précédentes, caractérisé en ce que deux rangées de couteaux (10) sont disposées entre les surfaces portantes (4, 6).

13. Ustensile de cuisine selon l'une des revendications précédentes, caractérisé en ce que les deux rangées de couteaux (10) sont disposées en rangées décalées l'une par rapport à l'autre.

14. Ustensile de cuisine selon l'une des revendications précédentes, caractérisé en ce que les traverses supérieures (12) des rangées de couteaux forment des couteaux à double tranchant avec des lames (16, 17).

15. Ustensile de cuisine selon l'une des revendications précédentes, caractérisé en ce que le contour de la plaque de base (2) dans la zone portante de la (des) rangée(s) de couteaux (10) présente une courbure dirigée vers la face supérieure de la plaque de base (2).
